# EUROPÄISCHE PATENTANMELDUNG

(11) **EP 1 510 386 A2**
(43) Veröffentlichungstag der Anmeldung: **02.03.2005**
(21) Anmeldenummer: 04103988.4
(22) Anmeldetag: 19.08.2004
(51) Int. Cl.: B60J 5/06

(54) **Führungsvorrichtung für Schiebe- oder Schwenkschiebetüren von Fahrzeugen sowie Schiebe- oder Schwenkschiebetür**

(30) Priorität: 25.08.2003 DE 10339347
(71) Anmelder: Brose Fahrzeugteile GmbH & Co. KG, Coburg, 96450 Coburg (DE)
(72) Erfinder: Kriese, Olaf, 96486 Lautertal (DE)
(74) Vertreter: Patentanwälte Kewitz & Kollegen Partnerschaft

(57) **Zusammenfassung**

Die Erfindung betrifft eine Führungsvorrichtung für Schiebe- oder Schwenkschiebetüren von Fahrzeugen mit wenigstens einer Tür (2), die mittels vertikal übereinander liegender Verbindungselemente (24,25) verschiebbar und/oder schwenkbar am Fahrzeug gelagert ist. Die Führungsvorrichtung (1) umfasst eine obere (3) und eine untere (4) Führungseinrichtung, mit der ein jeweiliges Verbindungselement (24,25) zumindest während einer Verschiebebewegung der Tür (2) zusammenwirkt, zumindest ein flexibles Zugmittel (9;9a,9b), und zumindest eine obere (7;15,16) und eine untere (8;18,19) an der Tür (2) befestigbare Umlenkeinrichtung, die in das zumindest eine Zugmittel (9;9a,9b) eingreifen, um dieses umzulenken.

Die Führungsvorrichtung (1) zeichnet sich dadurch aus, dass ein jeweiliges Zugmittel (9;9a,9b) mittels an einer Fahrzeugwand (28,30) anordenbarer oberer und unterer Zugmittelhaltebereiche (5,6) an der Fahrzeugwand befestigbar oder abstützbar ist.

## Beschreibung

Die vorliegende Erfindung betrifft eine Führungsvorrichtung für Schiebe- oder Schwenkschiebetüren von Fahrzeugen sowie eine Schiebe- oder Schwenkschiebetür und betrifft ganz allgemein eine Führungsanordnung sowie ein Führungs- und Antriebsprinzip für solche Fahrzeugtüren.

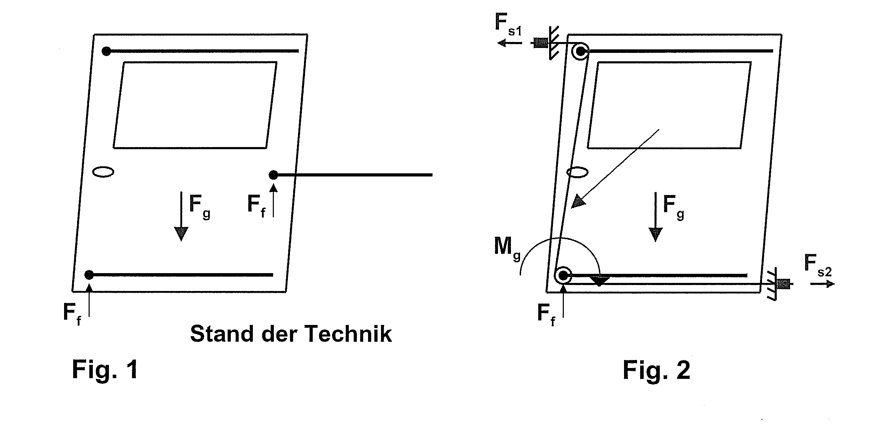

Die Fig. 1 zeigt eine Führungsvorrichtung für eine Schiebetür mit einer herkömmlichen 3-Punktführung gemäß dem Stand der Technik. Die allgemein mit 1 bezeichnete Führungsvorrichtung umfasst eine obere Führungsschiene 3, eine untere Führungsschiene 4 sowie eine mittlere Führungsschiene 100, die, in Fahrzeuglängsrichtung betrachtet, hinter der oberen und unteren Führungsschiene angeordnet ist. An der Tür 2 sind nicht dargestellte hebelartige Verbindungselemente starr befestigt, die in die obere und untere Führungsschiene 3, 4 eingreifen. In die mittlere Führungsschiene 100 greift ein Rollenwagen mit einem Rollenpaar ein. Die Verbindungselemente bzw. das Rollenpaar greifen an den mit den fetten Punkten markierten Bereichen in die jeweilige Führungsschiene 3, 4 bzw. 100 ein.

Gemäß der Fig. 1 wird die Gewichtskraft Fg der Tür 2 ausschließlich von der unteren Führungsschiene 4 und der mittleren Führungsschiene 100 abgestützt, wie durch die beiden Pfeile Ff angedeutet. Um ein Verkippen der Tür 2 in Längsrichtung zu verhindern, sind die beiden mit den Pfeilen Ff bezeichneten Abstützbereiche, wo die Gewichtskraft Fg der Tür 2 abgestützt wird, in Fahrzeuglängsrichtung zueinander im Wesentlichen um die Breite der Tür 2 versetzt, so dass ein vergleichsweise langer Hebel zur Verfügung steht.

Die mittlere Führungsschiene 100 sitzt gemäß dem Stand der Technik auf der Fahrzeugaußenwand, und zwar in Fahrzeuglängsrichtung betrachtet hinter der von der Tür zu verschließenden Türöffnung. Die mittlere Führungsschiene 100 ist als notwendiger Bestandteil der Fahrzeugaußenkarosserie deutlich sichtbar. Dies führt zu erheblichen Einschränkungen beim Fahrzeugaußendesign.

Ferner ist es gemäß dem Stand der Technik schwierig, eine Antriebseinheit zum elektromotorisch getriebenen Öffnen und Schließen der Tür in die Tür bzw. in ein in der Tür aufzunehmendes Türmodul zu integrieren. Ferner ist es gemäß dem Stand der Technik schwierig, die Antriebselemente zum Öffnen und Schließen der Tür von Führungseinrichtungen zum Führen der Tür zu trennen. All dies führt zu erheblichen Einschränkungen bei der Planung und Auslegung von Fahrzeugen mit Schiebe- oder Schwenkschiebetüren.

US 5,967,595 offenbart eine Führungsanordnung für Schiebetüren mit einer oberen und einer unteren Führungsschiene sowie einer mittleren Führungsschiene, die auf der Innenseite der Tür befestigt ist. Um einem Verkippen der Tür in der geöffneten Stellung der Tür entgegenzuwirken, sind die Abstützpunkte der Tür auch in der geöffneten Stellung versetzt.

US 6,038,818 offenbart einen Antriebsmechanismus zum Antreiben einer Kraftfahrzeug-Schiebetür. An der Fahrzeugkarosserie ist jeweils am oberen und unteren Rand der Türöffnung eine Führungsschiene befestigt, worin jeweils eine starr mit der Schiebetür verbundene Rolle geführt ist. Der Antriebsmechanismus umfasst eine am hinteren Ende der Schiebetür angebrachte Antriebseinheit, die mit einem Seil gekoppelt ist. Das Seil verläuft ausgehend von der Antriebseinheit zum vorderen Ende der Schiebetür, wird zu einer an der Fahrzeugkarosserie befestigten Führungshülse geführt und wird von dort mittels Umlenkrollen zurück zu der Antriebseinheit geführt. Das Seil dient ausschließlich zum Antreiben der Tür. Das Einhängen des Seils ist vergleichsweise aufwändig.

DE 196 32 427 A1 offenbart eine Führungsvorrichtung für Schwenkschiebetüren von Omnibussen. An der Türinnenseite ist ein flexibles Zugmittel angebracht, das von zumindest einer oberen und einer unteren starr an der Tür befestigten Umlenkeinrichtung, umgelenkt wird. Die Umlenkeinrichtungen greifen in das wenigstens eine Zugmittel ein, um dieses umzulenken. An das Zugmittel ist eine elektromotorische Antriebseinheit zum Öffnen und Schließen der Tür gekoppelt. Das Zugmittel dient ausschließlich dem Antrieb der Tür.

Das Gewicht der Tür ist an den oberen und unteren Führungsschienen abgestützt. Um ein Verkippen der Tür zu verhindern, ist die Tür ferner an einer vergleichsweise stabilen vertikalen Drehsäule gelagert.

Diese Führungsvorrichtung für Omnibusse ist vergleichsweise aufwändig ausgebildet und kann nicht ohne weiteres auf kleinere Kraftfahrzeuge, insbesondere Personenkraftwagen und Kleintransporter, übertragen wird.

Aufgabe der vorliegenden Erfindung ist es, eine Führungsvorrichtung für Schiebe- oder Schwenkschiebetüren von Fahrzeugen bereitzustellen, die neue Gestaltungsmöglichkeiten beim Fahrzeugdesign eröffnet und neue Antriebs- und Führungskonzepte ermöglicht. Ferner soll eine entsprechende Schiebe- oder Schwenkschiebetür bereitgestellt werden.

Diese Aufgabe wird gelöst durch eine Führungsvorrichtung mit den Merkmalen nach Anspruch 1 sowie durch eine Schiebe- oder Schwenkschiebetür nach Anspruch 17. Weitere vorteilhafte Ausführungsformen sind Gegenstand der rückbezogenen Unteransprüche.

Gemäß der vorliegenden Erfindung wird eine Führungsvorrichtung für Schiebe- oder Schwenkschiebetüren von Fahrzeugen mit wenigstens einer Tür, die mittels vertikal übereinander liegender Verbindungselemente verschiebbar und/oder schwenkbar am Fahrzeug gelagert ist, bereitgestellt, umfassend eine obere und eine untere Führungseinrichtung, mit der ein jeweiliges Verbindungselement zumindest während einer Verschiebebewegung der Tür zusammenwirkt, zumindest ein flexibles Zugmittel, und zumindest eine obere und eine untere an der Tür befestigbare Umlenkeinrichtung, die in das zumindest eine Zugmittel eingreifen, um dieses umzulenken. Die Führungsvorrichtung zeichnet sich erfindungsgemäß dadurch aus, dass ein jeweiliges Zugmittel mittels an einer Fahrzeugwand befestigbarer oberer und unterer Zugmittelhaltebereiche an der Fahrzeugwand befestigbar oder abstützbar ist.

Während die Gewichtskraft der Tür im Wesentlichen nur durch die untere und/oder obere Führungsschiene getragen wird, kann das aus der Gewichtskraft der Tür resultierende Kippmoment erfindungsgemäß von dem flexiblen Zugmittel aufgenommen und auf die Zugmittelhaltebereiche, die an der Fahrzeugwand befestigt sind, abgeleitet werden. Vorteilhaft ist, dass eine zusätzliche dritte Führungsschiene, die sich gemäß dem Stand der Technik üblicherweise auf der Fahrzeugaußenseite befindet, erfindungsgemäß zur Abstützung der Tür nicht mehr notwendig ist. Dies eröffnet neue Möglichkeiten beim Design von Fahrzeugen mit Schiebe- oder Schwenkschiebetüren. Beispielsweise kann der hintere Bereich einer Fahrzeugkarosserie völlig anders gestaltet werden, weil es erfindungsgemäß nicht mehr notwendig ist, eine zusätzliche dritte Führungsschiene in die Außenseite der Karosserie zu integrieren.

Erfindungsgemäß dient das Zugmittel einerseits der Kräfteweiterleitung, um aus einem Kippmoment der Tür resultierende Kräfte auf die an der Karosserie befestigten Zugmittelhaltebereiche abzuleiten, und andererseits der Abstützung der Tür, um einem aus dem Eigengewicht der Tür resultierenden Kippmoment entgegenzuwirken. Die in das oder die Zugmittel eingreifenden Umlenkeinrichtungen dienen im Wesentlichen dazu, die Tür an dem Zugmittel abzustützen. Bevorzugt sind die Umlenkeinrichtungen an dem vorderen Randbereich der Tür, vorzugsweise nahe der vorderen oberen und unteren Ecke der Tür, angeordnet, so dass die Tür auch noch in der geöffneten Stellung gegen ein Verkippen wirksam abgestützt werden kann.

Für eine wirksame Abstützung der Tür ist das Zugmittel entlang seiner Längsachse bevorzugt im Wesentlichen nicht dehnbar. Eine etwaige Zugmitteldehnung kann durch Spann- oder Ausgleichsvorrichtungen ausgeglichen werden.

Erfindungsgemäß dienen die Zugmittelhaltebereiche einer Fixierung des flexiblen Zugmittels, so dass End- oder Umkehrbereiche des Zugmittels nahe der Zugmittelhaltebereiche in sämtlichen Stellungen der Tür im Wesentlichen unverändert bleiben. Insgesamt bildet somit das Zugmittel eine relativ zu der Fahrzeugkarosserie fest verankerte aber flexible Führung, entlang der die Tür gegen ein Verkippen gesichert bewegt werden kann.

Bevorzugt ist das jeweilige Zugmittel zumindest um eine Querachse des Fahrzeugs biegsam, noch bevorzugter ist das Zugmittel in sämtliche Raumrichtungen biegsam. Zu diesem Zweck kann das Zugmittel als Seil, insbesondere als Drahtseil, als Kette, als Gliederkette, als Kugelkette, als Band bzw. Riemen oder in vergleichbarer Weise ausgebildet sein. Bevorzugt greifen die Umlenkeinrichtungen reibschlüssig in das oder die Zugmittel ein. Jedoch können Unregelmäßigkeiten oder Vorsprünge des Zugmittels, beispielsweise Kettenglieder, Band- oder Riemenvorsprünge oder dergleichen, auch für einen formschlüssigen Eingriff der Umlenkeinrichtungen in das oder die Zugmittel genutzt werden.

Grundsätzlich kann das jeweilige Zugmittel endlos ausgebildet sein, in welchem Fall die Verlaufsrichtung des Zugmittels an den zugeordneten Zugmittelhaltebereichen bevorzugt im Wesentlichen umgekehrt wird. Ein solches endloses Zugmittel kann an den Zugmittelhaltebereichen statisch fixiert.

Alternativ könnte ein solches endloses Zugmittel auch beweglich gehalten sein. Beispielsweise kann eine an einem Zugmittelhaltebereich befestigte Umlenkeinrichtung der Umlenkung eines als Zugmittel dienenden Seils, insbesondere Drahtseils, dienen, so dass das Seil endlos umlaufend geführt ist. An den Umlenkbereichen kann bei einer solchen Ausführungsform die jeweilige Umlenkeinrichtung mit dem Zugmittel verbunden sein. Durch Antreiben des Zugmittels kann dann die Tür geöffnet oder geschlossen werden. Eine solche alternative Ausführungsform beruht somit gleichsam auf einer Art kinematischer Umkehr des vorstehend angeführten Prinzips, wonach jeweilige Enden eines Zugmittels an der Fahrzeugkarosserie befestigt sind.

Ganz besonders bevorzugt weist das Zugmittel jedoch zwei Enden auf, die an Zugmittelbefestigungsbereichen fest an der Fahrzeugwand befestigt sind. Zur Befestigung kommen grundsätzlich reib-, form- oder stoffschlüssige Befestigungstechniken in Betracht. Zweckmäßig ist ein als Zugmittel dienendes Seil, insbesondere Drahtseil, mittels Halteösen, Seilverschraubungen, Schweißpunkten oder dergleichen an der Fahrzeugwand befestigt.

Bevorzugt sind die vertikal zueinander versetzten Zugmittelbefestigungsbereiche in der horizontalen Richtung, d.h. in Fahrzeuglängsrichtung, zueinander mindestens um die maximale Verstelllänge der Tür versetzt. Somit kann die Tür in jeder Lage zwischen der maximal geöffneten Stellung und der vollständig geschlossenen Stellung wirksam an dem Zugmittel abgestützt werden.

Grundsätzlich kann es erfindungsgemäß ausreichen, nur zwei Umlenkeinrichtungen zum Umlenken des oder der Zugmittel vorzusehen, d.h. eine obere und eine untere Umlenkeinrichtung. Bevorzugt weist die obere und die untere Umlenkeinrichtung jedoch zumindest zwei Umlenkeinrichtungen bzw. ein Umlenkelementpaar auf, die zueinander entlang der Querachse des Fahrzeugs versetzt angeordnet sind. Vorzugsweise wird das jeweilige Zugmittel an der sich jeweils am nächsten zu der Fahrzeugwand befindlichen oberen und unteren Umlenkeinrichtung gegenläufig umgelenkt. Wenn beispielsweise das Zugmittel im oberen Bereich der Tür, in Draufsicht auf die Umlenkeinrichtung betrachtet, im Uhrzeigersinn umgelenkt wird, so wird das Zugmittel im unteren Bereich der Tür, in Draufsicht auf die Umlenkeinrichtung betrachtet, im Gegenuhrzeigersinn umgelenkt. Somit können die aus dem Eigengewicht der Tür resultierenden Kippmomente noch symmetrischer von dem Zugmittel oder den Zugmitteln aufgenommen und abgeleitet werden.

Bevorzugt ist das vorgenannte Umlenkelementpaar so an einem zugeordneten Verbindungselement angebracht, dass das Zugmittel im Wesentlichen entlang dem Verbindungselement geführt wird. Zu diesem Zweck sind die Umlenkeinrichtungen bevorzugt an Befestigungspunkten an dem jeweiligen Verbindungselement befestigt.

Die Umlenkeinrichtungen greifen bevorzugt so in das jeweilige Zugmittel ein, dass das jeweilige Zugmittel zumindest in einer geöffneten oder geschlossenen Stellung der Tür, in der die größten Kippmomente auf die Tür einwirken, im Wesentlichen z-förmig geführt ist. Ein z-förmiger Zugmittelverlauf ist von Vorteil, weil die oberen und die unteren Umlenkeinrichtungen das Zugmittel dann um einen vergleichsweise großen Winkel umlenken können und die Tür aufgrund eines dann maximalen Widerstands, beispielsweise bedingt durch Reibungs- oder Dehnkräfte oder durch den Verformungswiderstand beim Verformen des Zugmittelverlaufs, optimal abgestützt werden kann.

In dem Bereich einer jeweiligen Umlenkeinrichtung wird das Zugmittel bevorzugt um einen Winkel im Bereich von etwa 80° bis 100° umgelenkt. Ganz besonders bevorzugt wird das Zugmittel in einem jeweiligen Umlenkbereich um einen von 90° abweichenden Winkel umgelenkt, beispielsweise um 95° oder 85°, so dass die obere Umlenkeinrichtung, in Fahrzeuglängsrichtung betrachtet, hinter der unteren Umlenkeinrichtung angeordnet ist.

Gemäß einer weiteren Ausführungsform umfasst die Führungsvorrichtung zwei Zugmittel, die zumindest abschnittsweise gegenläufig verlaufen und gegeneinander vorgespannt sind. Die beiden Zugmittel können beispielsweise in der Fahrzeugkarosserie am oberen bzw. unteren Rand der Türöffnung in im Wesentlichen entgegengesetzte Richtungen verlaufen, jedoch von zumindest zwei identischen Umlenkeinrichtungen, beispielsweise Umlenkrollen, gegenläufig umgelenkt werden. Aufgrund der gegenseitigen Verspannung der Zugmittelverläufe kann die Tür noch wirksamer abgestützt werden und können Kippmomente noch wirksamer von den Zugmitteln aufgenommen werden.

Damit das jeweilige Zugmittel, wenn es beim Verschieben der Tür an den Umlenkeinrichtungen entlang gleitet, nicht von den Umlenkeinrichtungen abrutscht oder herunter springt, weisen die Umlenkeinrichtungen bevorzugt eine Aufnahme auf, die korrespondierend zu einem Profil des zugeordneten Zugmittels ausgebildet ist, um das zugeordnete Zugmittel darin aufzunehmen. Im Falle eines als Zugmittel wirkenden Seils, insbesondere Drahtseils, könnte beispielsweise am Außenumfang einer Umlenkrolle eine Führungsrille vorgesehen sein, in der das Seil geführt wird.

Bevorzugt umfassen die Verbindungselemente jeweils zumindest ein Gelenk, um die Tür gelenkig mit der Fahrzeugwand oder einer darin vorgesehen Führungseinrichtung zu verbinden. Somit können die Führungseinrichtungen auch fahrzeugeinwärts oder fahrzeugauswärts gekrümmte Bereiche aufweisen, um die Tür beim Verschieben entlang der Fahrzeuglängsachse zusätzlich auch zu dem Fahrzeug hin oder von dem Fahrzeug weg zu führen.

Bevorzugt sind die Verbindungselemente als Hebel ausgebildet, die an einem der Tür abgewandten Ende ein gelenkiges Eingriffselement zum Eingreifen in die obere bzw. untere Führungseinrichtung tragen. Das Eingriffselement ist bevorzugt korrespondierend zu einem Profil der Führungseinrichtung ausgebildet, so dass die Tür im Wesentlichen spielfrei von den Führungseinrichtungen geführt werden kann. Wenn die Führungseinrichtung beispielsweise als Führungsschiene mit einer Längsaufnahme ausgebildet ist, so kann das Eingriffselement als in der Längsaufnahme beweglich gelagertes Laufrollenpaar oder als in der Längsaufnahme gleitbeweglich aufgenommenes Gleitelement ausgebildet sein. Aufgrund der gelenkigen Aufhängung des Eingriffselements an dem Verbindungselement kann das Eingriffselement auch im Eingriff mit fahrzeugeinwärts oder fahrzeugauswärts gekrümmten Bereichen der Führungseinrichtungen mühelos weiterbewegt werden.

Bevorzugt sind an dem oberen und/oder unteren Rand der Tür Führungsschienen angeordnet, die an ihrem hinteren Ende jeweils einen gekrümmten Bereich aufweisen. In eine solche Führungsschiene kann ein Eingriffselement, das von einem starr an der Fahrzeugwand befestigten und schwenkbar gelagerten Schwenkhebel getragen wird, eingreifen, um die Tür während der Verschiebung und/oder des Verschwenkens zusätzlich zu führen. Es sei darauf hingewiesen, dass dieses Merkmal eine Abkehr von dem herkömmlichen Führungsprinzip darstellt, wonach der Schwenkhebel mit einem Rollenwagen stets türfest montiert ist.

Bevorzugt ist die vorgenannte Führungsvorrichtung bereits so vormontiert, dass eine komplette Fahrzeugtür oder ein in einer Fahrzeugtür aufzunehmendes Türmodul mit einer kompletten Führungsvorrichtung und/oder einem Zugmittelsystem versehen ist, wobei die Elemente der Führungsvorrichtung und/oder des Zugmittelsystems nur noch geeignet mit der Fahrzeugkarosserie verbunden werden müssen.

Bevorzugt ist das Zugmittel oder Zugmittelsystem mit einer Antriebseinheit gekoppelt, um die Tür relativ zu der Fahrzeugwand zu verschieben und/oder zu verschwenken. Bevorzugt ist die Antriebseinheit direkt an der Tür oder an einem von der Tür aufzunehmenden bereits vorgefertigten Türmodul befestigt. Somit kann die Tür oder das Türmodul komplett vormontiert und mit einer eigenen Antriebseinheit ausgerüstet angeliefert und in das Fahrzeug montiert werden. Dieses Merkmal ermöglicht somit völlig neue Antriebskonzepte zum elektromotorisch angetriebenen Verschieben und/oder Verschwenken von Fahrzeugtüren.

Bevorzugt greift ein angetriebenes Element der Antriebseinheit form- oder reibschlüssig in das Zugmittel oder Zugmittelsystem ein. Ganz besonders bevorzugt weist die Antriebseinheit eine Seiltrommel auf, die von einem jeweiligen Zugmittel umschlungen ist. Die Seiltrommel rollt an dem jeweiligen Zugmittel ab oder wickelt dieses beim Verdrehen auf bzw. ab.

Gemäß einem weiteren Gesichtspunkt der vorliegenden Erfindung wird auch eine Schiebe- oder Schwenkschiebetür für Fahrzeuge mit einer Führungsvorrichtung, wie vorstehend beschrieben, bereitgestellt.

Gemäß einem weiteren Gesichtspunkt betrifft die vorliegende Erfindung eine Führungsanordnung für Schiebe- oder Schwenkschiebetüren von Fahrzeugen mit wenigstens einer Tür, die mittels vertikal übereinander liegender Verbindungselemente verschiebbar und/oder schwenkbar am Fahrzeug gelagert ist, umfassend eine obere und eine untere Führungseinrichtung, mit der ein jeweiliges Verbindungselement zumindest während einer Verschiebebewegung der Tür zusammenwirkt, zumindest ein flexibles Zugmittel und zumindest eine obere und eine untere Umlenkeinrichtung zum Befestigen an der Tür, welche Umlenkeinrichtungen in das zumindest eine Zugmittel eingreifen, um dieses umzulenken. Die Führungsanordnung zeichnet sich erfindungsgemäß dadurch aus, dass ein jeweiliges Zugmittel mittels an einer Fahrzeugwand befestigten oberen und unteren Zugmittelhaltebereichen an der Fahrzeugwand befestigt oder abgestützt ist.

Nachfolgend wird die Erfindung in beispielhafter Weise und unter Bezugnahme auf die beigefügten Zeichnungen beschrieben werden, aus denen sich weitere Merkmale, Vorteile und zu lösende Aufgaben ergeben werden und worin:
Fig. 1 in einer schematischen Darstellung eine Führungsvorrichtung mit einer Schiebetür gemäß dem Stand der Technik darstellt;
Fig. 2 in einer schematischen Ansicht eine Führungsvorrichtung mit einer Schiebetür gemäß der vorliegenden Erfindung darstellt;
Fig. 3a und 3b in einer schematischen Ansicht die Schiebetür gemäß der Fig. 2 in einem geschlossenen und in einem geöffneten Zustand darstellt;
Fig. 4 in einer schematischen Ansicht eine Modifikation der Schiebetür gemäß der Fig. 2 darstellt;
Fig. 5 in einer schematischen Ansicht eine weitere Modifikation der Schiebetür gemäß der Fig. 2 darstellt;
Fig. 6 in einer schematischen Perspektivansicht eine Schiebetür gemäß der Fig. 5 darstellt;
Fig. 7 in einer schematischen Perspektivansicht den Seilzugverlauf gemäß der Fig. 6 darstellt;
Fig. 8 in einer schematischen Seitenansicht die Schiebetür gemäß der Fig. 5 in einem halb geöffneten Zustand darstellt;
Fig. 9 in einem perspektivischen Teilschnitt die Schiebetür gemäß der Fig. 8 darstellt;
Fig. 10 in einem perspektivischen Teilschnitt die Schiebetür gemäß der Fig. 9 in einer geschlossenen Stellung darstellt; und
Fig. 11 in einem perspektivischen Teilschnitt die Schiebetür gemäß der Fig. 9 in einer geöffneten Stellung darstellt.

In den Figuren bezeichnen identische Bezugszeichen identische oder im Wesentlichen gleich wirkende Elemente oder Elementgruppen.

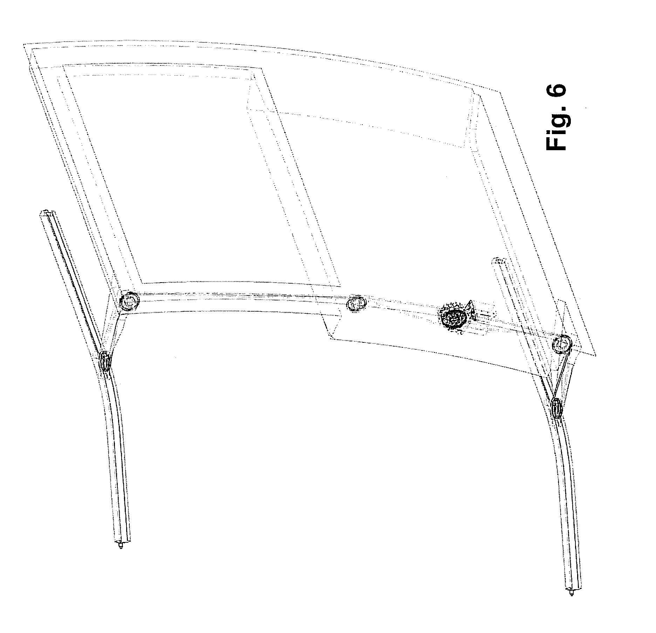

Die Fig. 2 zeigt in einer schematischen Ansicht eine Führungsvorrichtung mit einer Schiebetür gemäß der vorliegenden Erfindung. Die insgesamt mit 1 bezeichnete Führungsvorrichtung umfasst eine obere Führungseinrichtung 3 und eine untere Führungseinrichtung 4 zum Führen der Tür 2. Die beispielsweise als Führungsschienen (Fig. 6) ausgebildeten Führungseinrichtungen 3, 4 führen die Verschiebebewegung der Tür 2, wobei das Spiel in einer Richtung quer zur Fahrzeuglängsachse, d.h. in der Fig. 2 senkrecht zu der Zeichenebene, praktisch vernachlässigbar ist. Die Tür 2 kann eine Türöffnung durch Verschieben entlang der Fahrzeuglängsachse oder durch Verschieben entlang der Fahrzeuglängsachse und Verschwenken in Richtung einer Querachse des Fahrzeugs öffnen und wieder verschließen.

Die Führungsvorrichtung 1 umfasst ferner ein als Zugmittel wirkendes Seil 9, dessen beiden Enden in dem dargestellten Ausführungsbeispiel an dem oberen Befestigungsbereich 5 und dem unteren Befestigungsbereich 6 an der Fahrzeugwand befestigt ist. Zu diesem Zweck sind in der Fahrzeugwand geeignete Halte- oder Verankerungselemente vorgesehen, denen eine Spannvorrichtung zum Spannen des Seils 9 zugeordnet sein kann. Wie in der Fig. 2 dargestellt, wird das Seil 9 insgesamt z-förmig geführt. Zum Führen des Seils 9 sind in dem oberen und unteren Bereich der Tür 2 eine als obere Umlenkeinrichtung dienende obere Umlenkrolle 7 bzw. eine als untere Umlenkeinrichtung dienende untere Umlenkrolle 8 an der Tür 2 befestigt. Die Umlenkrollen 7, 8 führen das Seil 9 und lenken auf das Seil 9 einwirkende Kräfte in eine andere Raumrichtung um, wie nachfolgend ausgeführt. Damit das Seil 9 von den Umlenkrollen 7, 8 zuverlässig geführt ist, ist in den Umlenkrollen 7, 8 eine an das Profil des Seils 9 angepasste Führungsrille vorgesehen.

Wie in der Fig. 2 gezeigt, sind die Umlenkrollen 7, 8 zueinander vertikal versetzt und in dem dargestellten Ausführungsbeispiel auch horizontal zueinander versetzt, wenngleich dies nicht zwingend erforderlich ist. Gemäß der Fig. 2 überlappt eine Projektion der oberen Umlenkrolle 7 auf die untere Führungsschiene 4 mit derselben. Gemäß der Fig. 2 sind die Umlenkrollen 7, 8 am linken Rand der Tür 2 angebracht. Somit verlässt das Seil 9 die obere Kante 11 der Tür 2 und verläuft im Wesentlichen parallel und beabstandet zu dem Fenster 10 abwärts zu der unteren Umlenkrolle 8. Die Lage der Befestigungsbereiche 5, 6 und der Umlenkrollen 7, 8 ist so gewählt, dass in sämtlichen Lagen der Tür 2 das Seil 9 am oberen und unteren Rand der Tür 2 im Wesentlichen parallel zu der oberen bzw. unteren Führungsschiene 3, 4 verläuft.

Selbstverständlich können die Positionen der Umlenkrollen 7. 8 auch variiert werden und können auch weitere Umlenkrollen vorgesehen sein, um das Seil 9 geeignet zu führen. Dabei ist zu beachten, dass das Seil 9 geeignet um das Fenster 10 und in der Tür 2 aufgenommene Elemente, beispielsweise um einen Fensterheber, geeignet herumgeführt ist.

Gemäß der Fig. 2 wird die Gewichtskraft Fg der Tür 2 ausschließlich von der oberen und/oder unteren Führungsschiene 3, 4 aufgenommen. Zu diesem Zweck greifen, wie nachfolgend ausführlicher dargelegt wird, jeweilige Verbindungselemente, die an der Tür 2 und/oder mit der Fahrzeugwand befestigt sind, in an der Fahrzeugwand und/oder an der Tür 2 befestigte Führungsschienen oder vergleichbare Führungseinrichtungen ein.

Wie in der Fig. 2 gezeigt, wirkt auf die untere Umlenkrolle 8 ein aus dem Eigengewicht Fg der Tür 2 resultierendes Kippmoment Mg, das versucht, die Tür 2 um eine die Zeichenebene senkrecht schneidende Achse zu kippen. Ein entsprechendes Kippmoment wirkt auch auf die obere Umlenkrolle 7 ein. Durch die Abstützung der Umlenkrollen 7, 8 an dem verspannten Seil 9 wirkt dem aus dem Eigengewicht der Tür resultierenden Kippmoment ein Gegenmoment entgegen. Insgesamt wird das Kippmoment somit von der Seilzugführung aufgenommen.

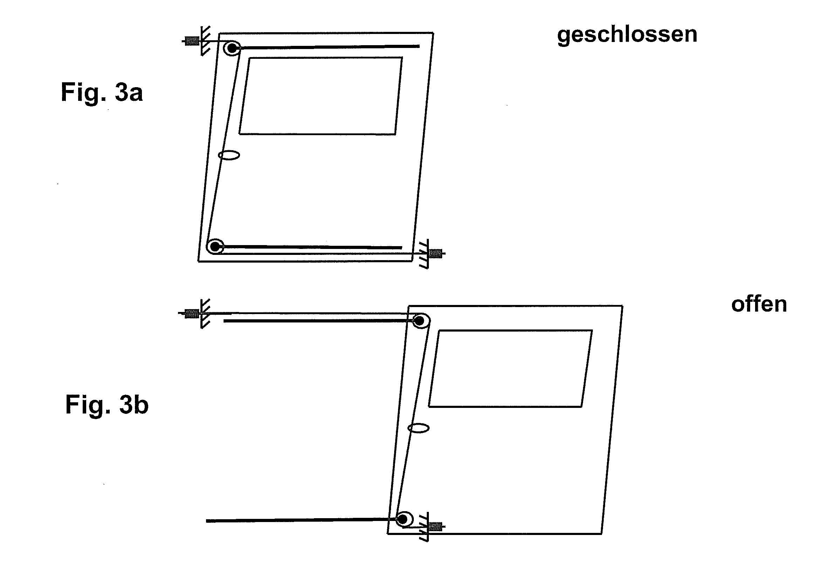

Die Fig. 3a und 3b zeigen in einer schematischen Ansicht die Schiebetür gemäß der Fig. 2 in einer geschlossenen und in einer offenen Stellung. Gemäß den Fig. 3a und 3b wird die Tür 2 durch Verschieben nach rechts bzw. zum hinteren Ende des nicht dargestellten Fahrzeugs geöffnet. Dabei wirken die nicht dargestellten Verbindungselemente (Fig. 6), die verschiebefest mit der Tür verbunden sind, mit der oberen und der unteren Führungsschiene 3, 4 zusammen, um die Gewichtskraft der Tür 2 abzustützen. Das Seil 9 wird in den an der Tür 2 befestigten oberen und unteren Umlenkrollen 7, 8 beim Verschieben der Tür 2 geführt. Der z-förmige Seilverlauf bleibt in jeder Stellung der Tür 2 erhalten. Gemäß den Fig. 3a und 3b sind die obere und untere Umlenkrolle 7, 8 horizontal zueinander um eine Länge x versetzt. Erkennbar ist der im Wesentlichen parallele Verlauf des Seils 9 am oberen und unteren Rand der Tür 2 zu der oberen bzw. unteren Führungsschiene 3, 4. Das Seil 9 verläuft bevorzugt oberhalb bzw. unterhalb der oberen bzw. unteren Führungsschiene 3, 4, beispielsweise innerhalb einer Fahrzeug-Innenverkleidung, so dass es in der geöffneten Stellung gemäß der Fig. 3b nicht erkennbar ist.

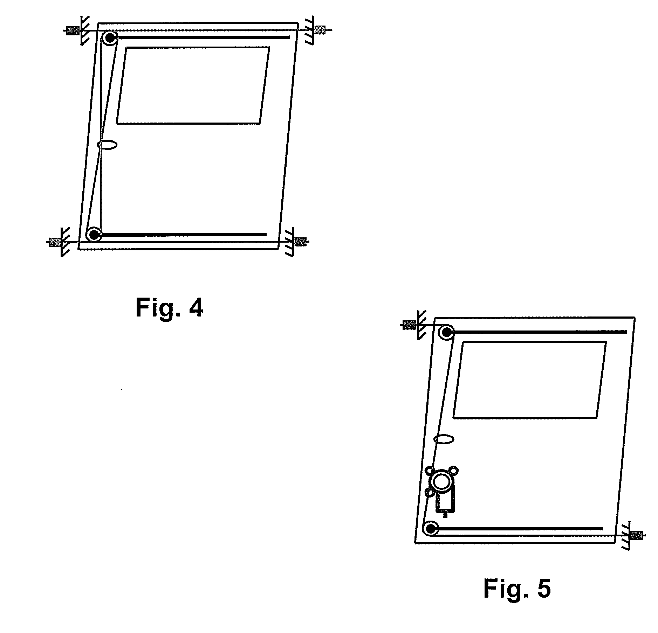

Die Fig. 4 zeigt in einer schematischen Ansicht eine Modifikation der Führungsvorrichtung gemäß der Fig. 2. Gemäß der Fig. 4 umfasst die Führungsvorrichtung 1 zwei abschnittsweise gegenläufig verlaufende Seile 9a, 9b. Ausgehend von dem vorderen, oberen Befestigungsbereich 5a umschlingt das erste Seil 9a die obere Umlenkrolle 7 im Uhrzeigersinn, verläuft dann im Wesentlichen parallel zu dem linken Rand der Tür 2, umschlingt die untere Umlenkrolle 8 im Gegenuhrzeigersinn und verläuft im Wesentlichen parallel zu der unteren Führungsschiene 4 zum hinteren, unteren Befestigungsbereich 6b. Ausgehend von dem hinteren, oberen Befestigungsbereich 5b verläuft das zweite Seil 9b im Wesentlichen parallel zu der oberen Führungsschiene 3 im Bereich der oberen Kante 11 der Tür 2, umschlingt die obere Umlenkrolle 7 im Gegenuhrzeigersinn, verläuft im Wesentlichen parallel zu dem linken Rand der Tür 2 vertikal abwärts, umschlingt die untere Umlenkrolle 8 im Uhrzeigersinn und verläuft dann im Wesentlichen parallel zu der unteren Führungsschiene 4 bis zu dem vorderen, unteren Befestigungsbereich 6a. Somit umschlingen die Seile 9a, 9b die obere bzw. untere Umlenkrolle 7, 8 gegenläufig, sodass zum Umlenken der Seile 9a, 9b beim Verschieben der Tür 2 dieselben Umlenkrollen verwendet werden können. Selbstverständlich können zum Umlenken des ersten und des zweiten Seils 9a, 9b im oberen bzw. unteren Bereich der Tür 2 auch jeweils gesonderte Umlenkrollen vorgesehen sein. Das erste Seil 9a und das zweite Seil 9b sind in der in der Fig. 4 gezeigten geschlossenen Stellung im Wesentlichen z-förmig und spiegelbildlich geführt. Die Abstützung der Tür 2 an den beiden gegeneinander verspannten Seilen 9a, 9b führt zu einer noch wirksameren Aufnahme des aus dem Eigengewicht der Tür 2 resultierenden Kippmoments.

Die Fig. 5 zeigt in einer schematischen Ansicht eine weitere Modifikation der Führungsvorrichtung und der Schiebetür gemäß der Fig. 2. Wie in der Fig. 5 dargestellt, ist am linken Rand der Tür 2 eine Antriebseinheit 12 an der Tür 2 befestigt, welche mit dem Seil 9 gekoppelt ist. Die Antriebseinheit 12 weist eine Seiltrommel 13 und einen Antriebsmotor 14 auf und wirkt auf das als Zugmittel dienende Seil 9 ein, um eine Verschiebung der Tür 2 relativ zu der Fahrzeugwand zu bewirken. Bei dem dargestellten Beispiel ist die Antriebseinheit 12 in der Art eines Antriebs für Seil- bzw. Bowden-Fensterheber ausgebildet, sodass das Seil 9 die Seiltrommel 13 zumindest einmal umschlingt oder ein Ende des Seils 9, beispielsweise ein Seilmittel, in einer Aufnahme der Seiltrommel 13 aufgenommen ist. Eine Drehbewegung des elektrischen Antriebsmotors 14 wird in eine Drehbewegung der Seiltrommel um eine die Zeichenebene senkrecht schneidende Drehachse umgesetzt. Dabei rollt das Seil 9 an der Seiltrommel 13 ab oder wird das Seil 9 von dieser auf- oder abgewickelt, was in einem Vortrieb der Tür 2 resultiert.

Wie dem Fachmann ohne weiteres ersichtlich sein wird, kann die Antriebseinheit 12 auch in bekannter Weise auf ein als Kette, als Gliederkette, als Kugelkette, als Riemen oder Zahnriemen ausgebildetes Zugmittel eingreifen, um den Vortrieb der Tür 2 zu bewirken.

Die Fig. 6 zeigt in einer schematischen Perspektivansicht die Führungsvorrichtung und die Schiebetür gemäß der Fig. 5. Wie in der Fig. 6 gezeigt, sind an dem vorderen oberen und unteren Rand der Tür 2 zwei als Verbindungselemente wirkende Hebel 24, 25 starr an der Tür 2 befestigt. Der obere und der untere Hebel 24, 25 erstrecken sich im Wesentlichen waagerecht und quer zur Fahrzeuglängsachse. An dem vorderen Ende trägt der obere bzw. untere Hebel 24, 25 gelenkig ein oberes bzw. unteres Laufradpaar 22, 23, das in die obere bzw. untere Führungsschiene 3, 4 eingreift und darin geführt wird. Das obere bzw. untere Laufradpaar 22, 23 ist um eine sich vertikal erstreckende Achse schwenkbar an dem zugeordneten Hebel 24 bzw. 25 gelagert.

Wie in der Fig. 6 gezeigt, weist die obere Führungsschiene 3 an ihrem vorderen Ende einen fahrzeugeinwärts gekrümmten Bereich 20 auf und weist die unter Führungsschiene 4 an ihrem vorderen Ende einen fahrzeugeinwärts gekrümmten Bereich 21 auf. Während die Tür 2 in dem hinteren Bereich der Führungsschienen 3, 4 im Wesentlichen parallel zu der Fahrzeugaußenwand geführt wird, wird die Tür 2 in dem vorderen Bereich der Führungsschienen 3, 4 in bekannter Weise zusätzlich hin zum Fahrzeug geführt, um die Türöffnung zu verschließen.

Gemäß der Fig. 6 wirken zwei Seile 9a, 9b als Seilzugführungen, die am linken Rand der Tür 2 in vertikaler Richtung innerhalb der Tür 2 geführt werden, beispielsweise von einer Tür-Innenverkleidung verdeckt, die dann entlang dem oberen bzw. unteren Hebel 24, 25 im Wesentlichen horizontal verlaufend hin zu dem Fahrzeug geführt werden und die schließlich im Wesentlichen horizontal verlaufend gegenläufig zu den zugeordneten Befestigungsbereichen 5, 6 in der Konfiguration gemäß der Fig. 4 geführt werden. Gemäß der Fig. 6 führt die obere bzw. untere Führungsschiene 3, 4 nicht nur die Laufradpaare 22, 23 sondern auch die Seile 9a, 9b, welche darin aufgenommen sind.

Wie in der Fig. 6 gezeigt, trägt der obere Hebel 24 an seinem vorderen Ende eine Umlenkrolle 15, die um eine im Wesentlichen senkrechte Drehachse drehbeweglich ist und von den beiden Seilen 9a, 9b gegenläufig umschlungen wird, wie im Zusammenhang mit der Fig. 4 beschrieben. Im Bereich der linken oberen Ecke der Tür 2 ist eine weitere Umlenkrolle 16 vorgesehen, die im Wesentlichen um eine Längsachse der Tür 2 drehbeweglich ist und von den beiden Seilen 9a, 9b gleichläufig umschlungen wird. Auch bei dem unteren Hebel 25 sind in entsprechender Weise zwei Umlenkrollen 18, 19 angeordnet. Eine weitere Umlenkrolle 17 dient der Führung und Umlenkung des zweiten Seils 9b, sodass die Seiltrommel 13 von den beiden Seilen 9a, 9b gegenläufig umschlungen wird.

Wie in der Fig. 6 gezeigt, kommt die Führungsvorrichtung 1 ohne eine dritte Führungsschiene aus, die sich ansonsten in der im Zusammenhang mit der Fig. 1 beschriebenen Weise zwischen der oberen Führungsschiene 3 und der unteren Führungsschiene 4 auf der Fahrzeugaußenwand befinden würde.

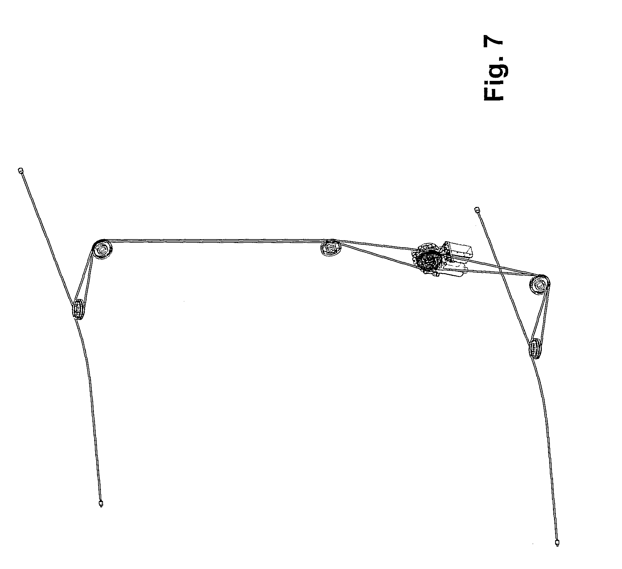

Die Fig. 7 zeigt in einer schematischen Perspektivansicht den Seilzugverlauf 27 gemäß der Fig. 6.

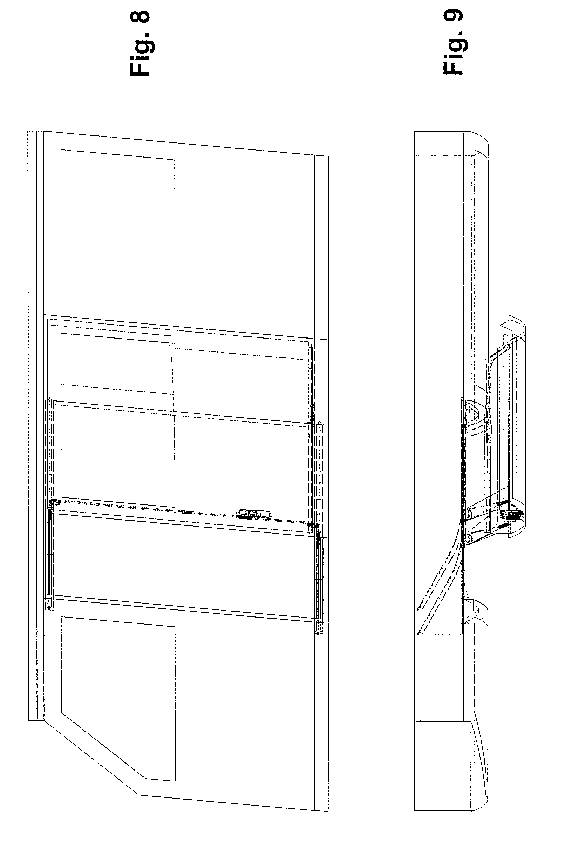

Die Fig. 8 zeigt in einer schematischen Seitenansicht die Anordnung der Tür gemäß der Fig. 4 in einem Fahrzeug. Zwischen dem ein vorderes Fenster 29 aufweisenden vorderen Karosseriebereich 28 und dem ein hinteres Fenster 31 aufweisenden hinteren Karosseriebereich 30 ist die in Richtung der Fahrzeuglängsachse verschiebbare Schiebetür 2 vorgesehen, um die Türöffnung 32 wahlweise zu verschließen und zumindest teilweise freizugeben.

Die Fig. 9 zeigt in einem perspektivischen Teilschnitt die Anordnung der Führungsschienen gemäß der vorliegenden Erfindung. In dieser überlagerten Darstellung ist sowohl der Verlauf der oberen Führungsschiene 3 mit dem vorderen, gekrümmten Bereich 20 als auch der Verlauf der unteren Führungsschiene 4 mit dem vorderen, gekrümmten Bereich 21 dargestellt. Wie durch die Pfeile angedeutet, sind die obere und untere Führungsschiene 3, 4 relativ zueinander um einen Horizontalversatz x versetzt. Die obere und untere Führungsschiene 3, 4 sind in dem Öffnungsbereich 32 an der Fahrzeugwand 28, 30 befestigt.

Gemäß der Fig. 9 befindet sich die Tür 2 in einer halb geöffneten Stellung. An dem oberen und unteren Randbereich der Tür 2 verläuft jeweils eine an der Tür 2 befestigte Führungsschiene 34, die einen hinteren, von dem Fahrzeug auswärts gekrümmten Bereich 35 aufweist.

Der obere Hebel 24 bzw. der untere Hebel 25 ist starr an der Tür 2 befestigt und trägt an seinem vorderen Ende jeweils ein in der Fig. 6 gezeigtes Laufradpaar, das in die obere bzw. unter Führungsschiene 3, 4 eingreift, um darin verschoben zu werden. In der halb geöffneten Stellung gemäß der Fig. 9 greifen die Laufradpaare in dem Übergangsbereich zu dem vorderen gekrümmten Bereich 20 bzw. 21 der oberen bzw. unteren Führungsschiene 3, 4 ein.

Im Bereich der hinteren oberen und/oder unteren Ecke der Türöffnung 32 ist jeweils ein Schwenkhebel 33 an der Fahrzeugwand 30 befestigt. Gemäß der Fig. 9 kann der Schwenkhebel 33 um die im Wesentlichen vertikal verlaufende Drehachse 39 geschwenkt werden. An seinem vorderen Ende trägt der Schwenkhebel 33 ein als Eingriffselement wirkendes Laufradpaar 36, das in die Führungsschiene 34 der Schiebetür 2 eingreift und darin gleitbeweglich verschoben werden kann. In der halb geöffneten Stellung gemäß der Fig. 9 greift das Laufradpaar 36 in den im Wesentlichen geradlinig verlaufenden vorderen Bereich der Führungsschiene 34 ein. In dieser Stellung wird der Abstand der Schiebetür 2 zu der Fahrzeugwand 28, 30 durch die Länge der Hebel 24, 25 sowie die Querabmessung des Schwenkhebels 33 vorgegeben, sodass die Schiebetür 2 im Wesentlichen parallel zu den Führungsschienen 3, 4 und zu den Fahrzeugwänden 28, 30 verläuft.

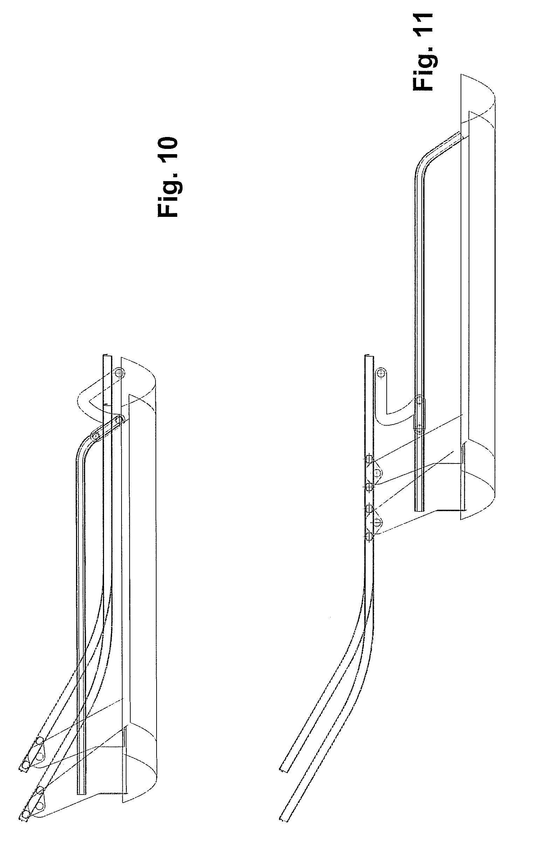

Die Fig. 10 zeigt in einem perspektivischen Teilschnitt die Schiebetür 2 gemäß der Fig. 9 in einer vollständig geschlossenen Stellung. Um aus der halb geöffneten Stellung gemäß der Fig. 9 in die geschlossene Stellung gemäß der Fig. 10 überführt zu werden, wird die Schiebetür 2 in Richtung der Fahrzeuglängsachse vorgeschoben, sodass die Laufradpaare 22, 23 in die gekrümmten Bereiche 20, 21 der oberen bzw. unteren Führungsschiene 3, 4 eingreifen und das Laufradpaar 36 in den hinteren gekrümmten Bereich 35 der Führungsschiene 34 eingreift, bis die Laufradpaare 22, 23 und 36 die Enden der jeweiligen Führungsschienen erreicht haben. Durch den Eingriff der Laufradpaare 22, 23 und 36 in die gekrümmten Bereiche 20, 21 und 35 der Führungsschienen 3, 4 und 34 wird eine Schwenkbewegung der Tür 2 bewirkt, sodass die Tür 2 um die Drehachse 39 herum fahrzeugeinwärts geschwenkt wird, um die Türöffnung 32 zu verschließen.

Die Fig. 11 zeigt die Schiebetür 2 gemäß der Fig. 9 in einer vollständig geöffneten Stellung, in welcher sämtliche Laufradpaare 22,23 und 36 in die geradlinig entlang der Fahrzeuglängsachse sich erstreckenden Bereiche der Führungsschienen 3, 4 und 34 eingreifen.

Wie dem Fachmann aus der vorstehenden Beschreibung ersichtlich sein wird, kann erfindungsgemäß ein Führungs- und Antriebsprinzip für Schiebetüren oder Schwenkschiebetüren realisiert werden, das ohne die herkömmliche Dreipunkt-Führung gemäß der Fig. 1 auskommt. Somit ist erfindungsgemäß die störende, sich auf der Fahrzeugaußenwand befindliche dritte Führungsschiene 100 gemäß der Fig. 1 nicht mehr erforderlich, was beim Design von Fahrzeugen neue Möglichkeiten eröffnet. Besonders bevorzugt findet das erfindungsgemäße Führungs- und Antriebsprinzip Anwendung bei Schiebe- oder Schwenkschiebetüren für Personenkraftwagen, Kleintransporter, Vans oder vergleichbare Kleinfahrzeuge.

Grundsätzlich ist jedoch nicht ausgeschlossen, dass zusätzlich zu den vorstehend beschriebenen Führungsschienen 3, 4 und 34 noch eine oder mehrere zusätzlichen Führungsschienen vorgesehen sein können, beispielsweise eine weitere Führungsschiene im Bereich der Türinnenseite, in die ein an der Fahrzeugaußenwand, beispielsweise nahe dem Randbereich der Türöffnung, befindliches Eingriffselement, beispielsweise ein Führungszapfen, eingreift und die als Führungskulisse oder dergleichen dient.

Gemäß der vorliegenden Erfindung kann auch eine elektromotorische Antriebseinheit zum Öffnen der Schiebetür in die Tür selbst oder in ein in die Tür zu montierendes Türmodul integriert werden. Somit können erfindungsgemäß Türen oder Türmodule mit integrierter elektromotorischer Antriebseinheit vollständig vormontiert geliefert werden, was den Aufwand bei der Montageplanung reduzieren hilft. Die Tür oder das aufzunehmende Türmodul kann wahlweise, bei im Wesentlichen unverändertem Seilzugverlauf, mit einer Antriebseinheit versehen werden, sodass sich erfindungsgemäß wahlweise manuell oder elektrisch betätigte Schiebetüren oder Schwenkschiebetüren realisieren lassen.

Wie dem Fachmann beim Studium der vorstehenden Beschreibung ohne weiteres ersichtlich sein wird, können zahlreiche Modifikationen und Änderungen vorgenommen werden, ohne von dem Lösungsgedanken oder dem Schutzbereich der beigefügten Patentansprüche abzuweichen. Solche Änderungen und Modifikationen sollen deshalb ausdrücklich von der vorliegenden Erfindung mit umfasst sein.

### Bezugszeichenliste

- 1: Führungsvorrichtung
- 2: Schiebetür
- 3: Obere Führung
- 4: Untere Führung
- 5: Oberer Befestigungsbereich
- 5a: vorderer, oberer Befestigungsbereich
- 5b: hinterer, oberer Befestigungsbereich
- 6: Unterer Befestigungsbereich
- 6a: vorderer, unterer Befestigungsbereich
- 6b: hinterer, unterer Befestigungsbereich
- 7: Obere Umlenkrolle
- 8: Untere Umlenkrolle
- 9: Zugmittel/Seil
- 9a: erstes Zugmittel/Seil
- 9b: zweites Zugmittel/Seil
- 10: Fenster
- 11: Obere Kante der Schiebetür
- 12: Antriebseinheit
- 13: Seiltrommel
- 14: Antriebsmotor
- 15: Umlenkrolle
- 16: Umlenkrolle
- 17: Umlenkrolle
- 18: Umlenkrolle
- 19: Umlenkrolle
- 20: Gekrümmter Bereich der oberen Führung
- 21: Gekrümmter Bereich der unteren Führung
- 22: Laufrad
- 23: Laufrad
- 24: oberer Hebel
- 25: unterer Hebel
- 26: Antriebsbereich
- 27: Seilanordnung
- 28: Vorderer Karosseriebereich
- 29: Vorderes Fenster
- 30: Hinterer Karosseriebereich
- 31: hinteres Fenster
- 32: Türöffnungsbereich
- 33: Schwenkhebel
- 34: Führung
- 35: gekrümmter Bereich der Führung 34
- 36: Laufrad
- 37: erster Bereich
- 38: zweiter Bereich
- 39: Drehachse
- 100: dritte Führungsschiene
- x: Horizontalversatz

## Patentansprüche

1. Führungsvorrichtung für Schiebe- oder Schwenkschiebetüren von Fahrzeugen mit wenigstens einer Tür (2), die mittels vertikal übereinander liegender Verbindungselemente (24, 25) verschiebbar und/oder schwenkbar am Fahrzeug gelagert ist, umfassend
eine obere (3) und eine untere (4) Führungseinrichtung, mit der ein jeweiliges Verbindungselement (24, 25) zumindest während einer Verschiebebewegung der Tür (2) zusammenwirkt,
zumindest ein flexibles Zugmittel (9; 9a, 9b), und
zumindest eine obere (7; 15, 16) und eine untere (8; 18, 19) an der Tür (2) befestigbare Umlenkeinrichtung, die in das zumindest eine Zugmittel (9; 9a, 9b) eingreifen, um dieses umzulenken,
**dadurch gekennzeichnet, dass** ein jeweiliges Zugmittel (9; 9a, 9b) mittels an einer Fahrzeugwand (28, 30) befestigbarer oberer und unterer Zugmittelhaltebereiche (5, 6) an der Fahrzeugwand befestigbar oder abstützbar ist.

2. Führungsvorrichtung nach Anspruch 1, bei der das zumindest eine Zugmittel (9) jeweils zumindest um eine Querachse des Fahrzeugs und bevorzugt in alle Raumrichtungen biegsam ist.

3. Führungsvorrichtung nach einem der vorhergehenden Ansprüche, bei der das jeweilige Zugmittel (9) mit einander gegenüberliegenden Enden an vertikal zueinander versetzten und horizontal um zumindest eine Verstelllänge der Tür (2) zueinander versetzten Zugmittelbefestigungsbereichen (5, 6) an der Fahrzeugwand (28, 30) befestigbar ist.

4. Führungsvorrichtung nach einem der vorhergehenden Ansprüchen, bei der eine obere (15) und eine untere (19) Umlenkeinrichtung, die jeweils nahe zu der Fahrzeugwand (28, 30) an der Tür (2) befestigbar sind, das jeweilige Zugmittel (9; 9a, 9b) gegenläufig umlenken.

5. Führungsvorrichtung nach einem der vorhergehenden Ansprüche, bei der die Umlenkeinrichtungen (7, 8) so in das jeweilige Zugmittel (9; 9a, 9b) eingreifen, dass das jeweilige Zugmittel zumindest in einer geöffneten oder geschlossenen Stellung der Tür (2) im Wesentlichen z-förmig geführt ist.

6. Führungsvorrichtung nach Anspruch 5, umfassend zwei Umlenkeinrichtungen, wobei die obere Umlenkeinrichtung (7; 15), in Fahrzeuglängsrichtung betrachtet, hinter der unteren Umlenkeinrichtung (8; 19) angeordnet ist.

7. Führungsvorrichtung nach einem der vorhergehenden Ansprüche, bei der zwei Zugmittel (9a, 9b) vorgesehen sind, die zumindest abschnittsweise gegenläufig verlaufen und gegeneinander vorgespannt sind.

8. Führungsvorrichtung nach einem der Ansprüche, bei der die Umlenkeinrichtungen (7, 8) eine Aufnahme aufweisen, die korrespondierend zu einem Profil des zugeordneten Zugmittels (9; 9a, 9b) ausgebildet ist, um das zugeordnete Zugmittel darin aufzunehmen.

9. Führungsvorrichtung nach einem der vorhergehenden Ansprüche, bei der die obere und die untere Umlenkeinrichtung jeweils als Umlenkelementpaar (15, 16; 18, 19) ausgebildet ist, um das zugeordnete Zugmittel (9) entlang dem zugeordneten Verbindungselement (24, 25) zu führen.

10. Führungsvorrichtung nach einem der vorhergehenden Ansprüche, bei der die Verbindungselemente (24, 25) ein Gelenk umfassen, um die Tür (2) gelenkig mit der Fahrzeugwand (28, 30) zu verbinden.

11. Führungsvorrichtung nach Anspruch 10, bei der die Verbindungselemente (24, 25) als Hebel ausgebildet sind, die an einem der Tür (2) abgewandten Ende ein gelenkiges Eingriffselement (22, 23) zum Eingreifen in die obere bzw. untere Führungseinrichtung (3, 4) tragen.

12. Führungsvorrichtung nach einem der vorhergehenden Ansprüche, bei der die obere und untere Führungseinrichtung jeweils als Führungsschiene (3, 4) ausgebildet ist, die an der Fahrzeugwand (28, 30) befestigbar ist und an einem vorderen Ende einen gekrümmten Bereich (20, 21) aufweist.

13. Führungsvorrichtung nach Anspruch 12, bei der die obere und untere Führungseinrichtung ferner eine an der Tür (2) befestigbare obere und untere Führungsschiene (34) umfasst, die an einem hinteren Ende einen gekrümmten Bereich (35) aufweist.

14. Führungsvorrichtung nach den Ansprüchen 12 und 13, weiterhin umfassend einen oberen und unteren Schwenkhebel (33), der jeweils schwenkbar an der Fahrzeugwand (28, 30) befestigbar ist und ein Eingriffselement (36) trägt, das gleitbeweglich in die an der Tür (2) befestigbare obere bzw. untere Führungsschiene (34) aufnehmbar ist.

15. Führungsvorrichtung nach einem der vorhergehenden Ansprüche, bei der zumindest ein Zugmittel (9) mit einer Antriebseinheit (12) gekoppelt ist, um eine Relativverschiebung der Tür (2) relativ zu der Fahrzeugwand (28, 30) zu bewirken, wobei die Antriebseinheit an der Tür (2) befestigbar ist.

16. Führungsvorrichtung nach Anspruch 15, bei der die Antriebseinheit (12) eine Seiltrommel (13) umfasst, die von einem jeweiligen Zugmittel (9) umschlungen ist.

17. Schiebe- oder Schwenkschiebetür für Fahrzeuge, **gekennzeichnet durch** eine Führungsvorrichtung nach einem der vorhergehenden Ansprüche.

18. Schiebe- oder Schwenkschiebetür nach Anspruch 17, weiterhin umfassend eine Antriebseinheit (12), die an der Tür (2) befestigt ist, um das zumindest eine Zugmittel (9) zu treiben und die Tür (2) relativ zu der Fahrzeugwand (28, 30) zu verschieben und/oder zu verschwenken.
